# EUROPÄISCHE PATENTSCHRIFT

(11) **EP 2 438 326 B1**
(45) Veröffentlichungstag und Bekanntmachung des Hinweises auf die Patenterteilung: **03.04.2013**
(21) Anmeldenummer: 10721150.0
(22) Anmeldetag: 19.05.2010
(51) Int. Cl.: F16H 57/08, F16H 1/46, F16H 3/62

(54) **PLANETENGETRIEBE MIT GESCHACHTELTEN PLANETENRADSTUFEN**
PLANETARY GEARBOX HAVING NESTED PLANETARY GEAR STAGES
ENGRENAGE PLANETAIRE DOTE D'ETAGES EMBOITES DE ROUES PLANETAIRES

(30) Priorität: 04.06.2009 DE 102009026751
(43) Veröffentlichungstag der Anmeldung: 11.04.2012
(73) Patentinhaber: ZF Friedrichshafen AG, 88038 Friedrichshafen (DE)
(72) Erfinder: DOEPFERT, Hagen, 88131 Lindau (DE); BUCHER, Alexander, 78467 Konstanz (DE); ZIEMER, Peter, 88069 Tettnang (DE); HANTKE, Ulrich, 66386 St. Ingbert (DE)
(86) Internationale Anmeldenummer: PCT/EP2010/056909
(87) Internationale Veröffentlichungsnummer: WO 2010/139559

(56) Entgegenhaltungen:
- JP-A- 1 141 256
- JP-A- 7 133 848
- US-A- 3 939 736
- US-A- 5 503 605
- US-A1- 2003 232 692

## Beschreibung

Die Erfindung betrifft ein Planetengetriebe für ein Automatikgetriebe eines Kraftfahrzeuges, umfassend zwei Stufen, welche jeweils ein Sonnenrad, ein Hohlrad und zwischengeschaltete Planetenräder aufweisen, wobei das Hohlrad der ersten Stufe zugleich das Sonnenrad der zweiten Stufe ausbildet und die Planetenräder beider Stufen über einen gemeinsamen, aus einem Gussmaterial gefertigten Planetenträger geführt sind, welcher die Planetenräder der ersten Stufe unter einem axialen Versatz zu den Planetenrädern der zweiten Stufe aufnimmt.

Es sind bei Automatikgetrieben von Kraftfahrzeugen Planetengetriebe mit geschachtelten Planetenradstufen bekannt, mittels welcher eine Leistung zwischen einem innenliegenden Sonnenrad, zwei Planetenstufen und einem außenliegenden Hohlrad übertragbar ist. Aufgrund der engen Bauraumverhältnisse bei diesen Automatikgetrieben können die Planetenstufen dabei in axialer Richtung versetzt zueinander liegen.

Aus der US 5,503,605 A geht ein derartiges Planetengetriebe für ein Automatikgetriebe hervor, bei welchem Planetenräder einer ersten Stufe zum einen mit einem innenliegenden Sonnenrad und zum anderen mit einer Innenverzahnung eines ersten Hohlrades in Eingriff stehen. Dieses Hohlrad der ersten Planetenradstufe verfügt dabei auf seinem Außenumfang über eine weitere Verzahnung, über welche es mit Planetenrädern einer zweiten Planetenradstufe in Wirkverbindung steht, die wiederum mit einem außenliegenden Hohlrad kämen. Die Planetenräder beider Planetenradstufen werden in radialer Richtung fluchtend hintereinander liegend über einen gemeinsamen Planetenträger geführt, wobei die Planetenräder der ersten Stufe aufgrund der vorherrschenden Bauraumverhältnisse in axialer Richtung versetzt zu den Planetenrädern der zweiten Stufe angeordnet sind. Zudem setzt sich der Planetenträger aus zwei Einzelteilen zusammen, die jeweils die Planetenräder einer Stufe aufnehmen und im Bereich der ersten Planetenradstufe zusammengefügt sind.

Es ist des Weiteren im Allgemeinen bekannt, dass ein Planetenträger eines Planetengetriebes mittels eines urformenden Fertigungsverfahrens hergestellt werden kann.

Der zweiteilige Aufbau des Planetenträgers bringt jedoch die Problematik mit sich, dass der Planetenträger in einem zusätzlichen Montageschritt zusammengefügt werden muss, was den Aufwand erhöht und die Belastbarkeit des Trägers in diesem Bereich vermindert. Auf der anderen Seite würde die einteilige Fertigung eines derartigen Planetenträgers den Fertigungsprozess aufgrund des durch die Anordnung der Planetenräder gebildeten Hinterschnitts erheblich erschweren. Es wäre entweder die Verwendung eines aufwendigeren Gießverfahrens, bei welchem die hinterschnittenen Taschen der ersten Stufe mit einem ausschmelzbaren Kern ausgebildet werden, oder eine spanende Ausarbeitung der Taschen nach dem Gießen nötig. Beide Varianten erhöhen den Herstellungsaufwand beträchtlich.

Es ist daher die Aufgabe der vorliegenden Erfindung, ein Planetengetriebe mit geschachtelten Planetenradstufen für ein Automatikgetriebe zu schaffen, bei welchem ein, die Planetenräder führender Planetenträger einteilig ausgeführt ist, gleichzeitig aber der Herstellungsaufwand zur Fertigung dieses Planetenträgers vermindert ist.

Diese Aufgabe wird ausgehend vom Oberbegriff des Anspruchs 1 in Verbindung mit dessen kennzeichnenden Merkmalen gelöst. Die darauffolgenden, abhängigen Ansprüche geben jeweils vorteilhafte Weiterbildungen der Erfindung wieder.

Die Erfindung umfasst die technische Lehre, dass der Planetenträger derart einstückig ausgeführt ist, dass Taschen im Planetenträger zur Aufnahme der Planetenräder der ersten Stufe jeweils unter einem Versatzwinkel in Umfangsrichtung zu Taschen zur Aufnahme der Planetenrädern der zweiten Stufe angeordnet sind, um eine Ausbildung während des Gießens mit Hilfe von Schiebern zu ermöglichen. Durch den somit gebildeten, relativen Versatz der Planetenräder beider Stufen zueinander können die Taschen der jeweiligen Planetenräder über radiale Schieber entformt werden. Folglich ist eine Fertigung des Planetenträgers des erfindungsgemäßen Planetengetriebes mittels eines herkömmlichen Gießverfahrens und bei niedrigem Aufwand möglich.

Mit Versatzwinkel ist hierbei der Winkel gemeint, der zwischen Verbindungslinien benachbarter Aufnahmebohrungen für Bolzen der Planetenräder mit einem Mittelpunkt des Planetenträgers eingeschlossen wird.

Gemäß einer Ausgestaltung der Erfindung liegt der Versatzwinkel im Bereich 20° bis 70°. Die Wahl eines Versatzwinkels dieses Bereichs zwischen den jeweiligen Taschen der ersten und der zweiten Stufe hat den Vorteil, dass über einen radialen Schieber eine Tasche der ersten Stufe gemeinsam mit einer Tasche der zweiten Planetenradstufe ausgebildet werden kann. Dadurch wird die Anzahl an benötigten Schiebern beim Gießen also vermindert.

In Weiterbildung der Erfindung ist jede Tasche mittels eines individuellen Schiebers ausbildbar. Vorteilhafterweise kann hierdurch die jeweilige Tasche optimal in Bezug auf ihre Kontur und damit bezüglich Festigkeit und Laufruhe des Planetenträgers gestaltet werden.

Es ist eine Ausgestaltung der vorliegenden Erfindung, dass zwischen den Taschen zur Aufnahme der Planetenräder der zweiten Stufe und Durchbrüchen zur Fertigung der Taschen der ersten Stufe jeweils Stege in Umfangsrichtung vorgesehen sind. Dies hat den Vorteil, dass die Steifigkeit des Planetenträgers durch die gebildeten Stege in diesem Bereich deutlich gesteigert werden kann.

Entsprechend einer weiteren, vorteilhaften Ausgestaltung der Erfindung weisen die erste und die zweite Stufe unterschiedliche Anzahlen an Planetenrädern auf. Dadurch kann jede Planetenradstufe individuell an die zu übertragenden Drehmomente durch Wahl einer entsprechenden Anzahl an Planetenrädern angepasst werden, wodurch sich die Anzahl an Planetenrädern reduzieren und somit der Herstellungsaufwand des Planetengetriebes vermindern lässt.

Zweckmäßigerweise ist der Planetenträger des Weiteren als Druckgussteil ausgebildet. Hierdurch kann eine Fertigung des Planetenträgers mit hoher Genauigkeit erreicht werden.

Weitere, die Erfindung verbessernde Maßnahmen werden nachstehend gemeinsam mit der Beschreibung bevorzugter Ausführungsformen der Erfindung anhand der Figuren näher dargestellt.

Es zeigt:
- Fig. 1: eine Schnittdarstellung eines erfindungsgemäßen Planetengetriebes gemäß einer ersten Ausführungsform, geschnitten entlang der Linie A-A in Fig. 2;
- Fig. 2: einen Querschnitt des Planetengetriebes, geschnitten entlang der Linie B-B in Fig. 1; und
- Fig. 3: einen Querschnitt eines Planetenträgers eines erfindungsgemäßen Planetengetriebes gemäß einer zweiten Ausführungsform.

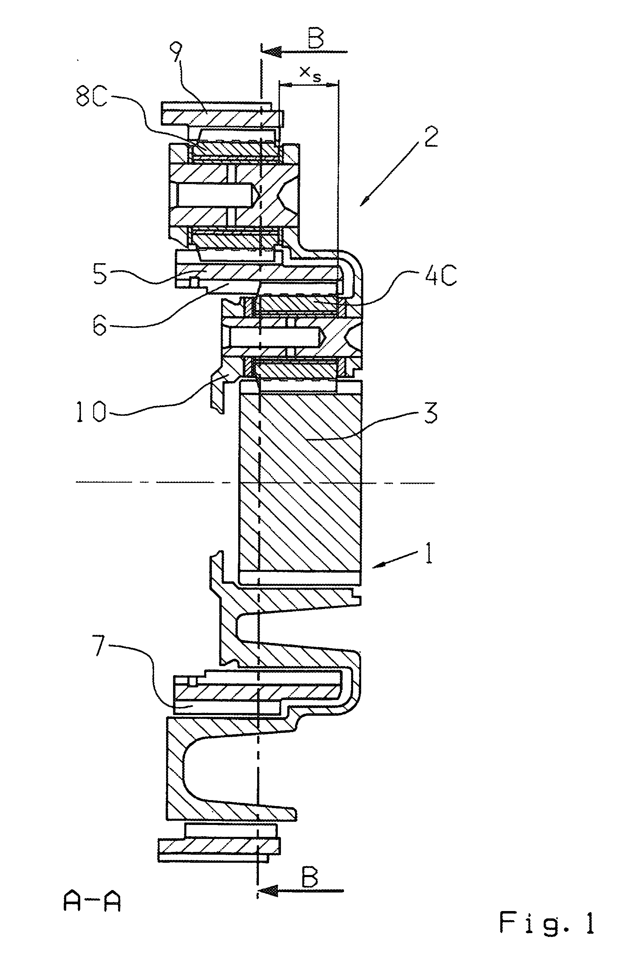

In Fig. 1 ist eine Schnittdarstellung eines erfindungsgemäßen Planetengetriebes gemäß einer ersten Ausführungsform zu sehen, welches sich aus zwei geschachtelten Stufen 1 und 2 zusammensetzt. Die erste Stufe 1 weist ein innenliegendes Sonnenrad 3 auf, das über drei Planetenräder 4A-4C, von denen in dieser Ansicht allerdings aufgrund des Schnittverlaufs nur das Planetenrad 4C zu sehen ist, mit einem Hohlrad 5 in Wirkverbindung steht. Dieses Hohlrad 5 weist dabei neben einer Innenverzahnung 6 zum Kontakt mit den Planetenrädern 4A-4C der ersten Stufe 1 am Außenumfang eine Außenverzahnung 7 auf, über welche das Hohlrad 5 mit drei Planetenrädern 8A-8C der zweiten Stufe 2 in Eingriff steht und hierbei das Sonnenrad für die zweite Stufe 2 ausbildet. Die Planetenräder 8A-8C stehen wiederum mit einem außenliegenden, zweiten Hohlrad 9 in Wirkverbindung. Mittels dieser geschachtelten Bauweise des Planetengetriebes kann bei Verwendung in einem Automatikgetriebe eines Kraftfahrzeuges auf dem Fachmann bekannten Art und Weise durch gezielte Betätigung nicht dargestellter Kupplungselementen eine gewünschte Drehzahl- und Drehmomentübersetzung erfolgen.

Die Planetenräder 4A-4C der ersten Stufe 1 und die Planetenräder 8A-8C der zweiten Stufe 2 werden über einen gemeinsamen Planetenträger 10 geführt, welcher die Planetenräder 4A-4C bezüglich der Planetenräder 8A-8C mit einem axialen Versatz xₛ aufnimmt, um ein kompaktbauendes Planetengetriebe zu erhalten und damit einen platzsparenden Verbau im Bereich eines Automatikgetriebes zu ermöglichen. Hierbei ist der Planetenträger 10 als einstückiges Druckgussbauteil ausgeführt, wobei die Planetenräder 4A-4C und 8A-8C jeweils in Umfangsrichtung versetzt zueinander liegend angeordnet sind, um trotz des durch den axialen Versatz xₛ gebildeten Hinterschnitts im Bereich der Planetenräder 4A-4C eine Entformung während des Gießprozesses mittels radialer Schieber zu ermöglichen.

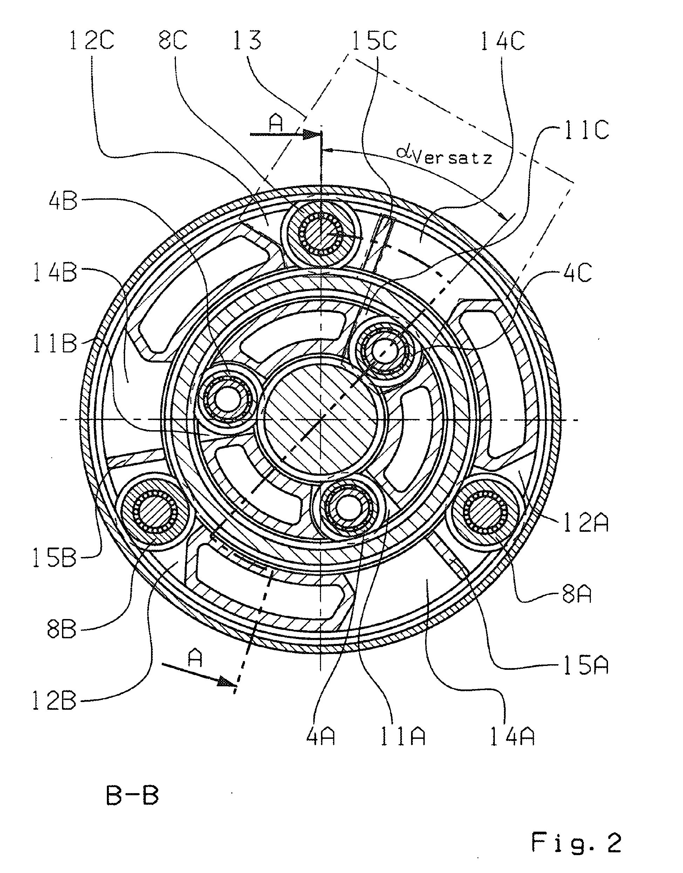

In Fig. 2 ist ein Querschnitt des erfindungsgemäßen Planetengetriebes aus Figur 1 dargestellt, aus welchem der Versatz in Umfangsrichtung zwischen den Planetenrädern 4A-4C und 8A-8C besser hervorgeht. Wie zu erkennen ist, liegen im radialen Innenbereich des Planetenträgers 10 ausgebildete Taschen 11 A bis 11 C, die zur Aufnahme der Planetenräder 4A-4C der ersten Stufe 1 vorgesehen sind, jeweils unter einem Versatzwinkel α_{versatz} zu Taschen 12A bis 12C, die im außenradialen Bereich des Planetenträgers 10 und zur Aufnahme der Planetenräder 8A-8C der zweiten Stufe 2 angeordnet sind. Durch diesen Versatzwinkel α_{Versatz} ist es somit möglich, trotz des axialen Versatzes xₛ zwischen den Planetenrädern 4A-4C und 8A-8C der beiden Stufen 1 und 2 die Taschen mittels radialer Schieber während des Gießprozesses zu entformen. Im vorliegenden Fall ist der Versatzwinkel α_{Versatz} hierbei derart klein gewählt, dass die Taschen 11 A bis 11C und die Taschen 12A bis 12C jeweils paarweise über einen gemeinsamen radialen Schieber entformt werden können, wie beispielhaft durch eine Ersatzkontur 13 eines radialen Schiebers dargestellt. Diese Kontur 13 ist des Weiteren so gestaltet, dass zwischen den Taschen 12A bis 12C zur Aufnahme der Planetenräder 8A-8C und Durchbrüchen 14A bis 14C, welche zur Fertigung der Taschen 11A bis 11C in den außenradialen Bereich des Planetenträgers 10 beim Entformen eingebracht sind, jeweils Stege 15A bis 15C definiert werden. Über diese Stege 15A bis 15C kann die Festigkeit des Planetenträgers 10 in diesem Bereich deutlich gesteigert werden.

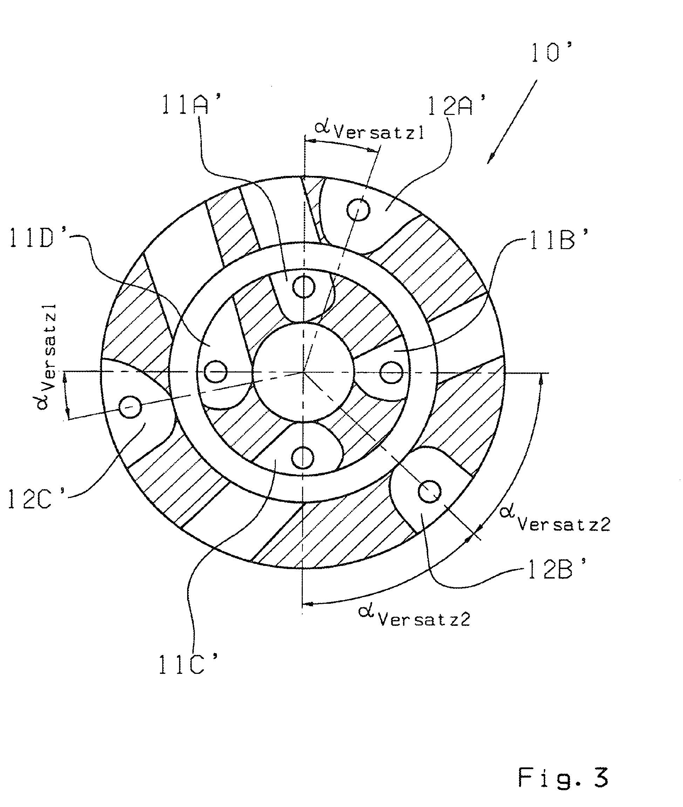

In Fig. 3 ist der Querschnitt eines Planetenträgers 10'einer alternativen Ausführungsform des erfindungsgemäßen Planetengetriebes als Einzelteil zu sehen. Im Unterschied zu der im Vorfeld beschriebenen Variante sind in diesem Fall am innenradialen Bereich des Planetenträgers 10' vier Taschen 11A' bis 110' für vier Planetenräder vorgesehen, während im Bereich des Außenumfangs des Planetenträgers 10', wie bei der vorherigen Variante, drei Kammern 12A' bis 12C' zur Aufnahme von drei Planetenrädern ausgebildet sind. Aufgrund der somit unterschiedlichen Anzahlen an zu führenden Planetenrädern am innenradialen und am außenradialen Bereich des Planetenträgers 10' werden unterschiedliche Versatzwinkel α_{Versatz1} und α_{Versatz2} jeweils zwischen den Taschen 11 A' bis 11D' und 12A' bis 12C' gebildet. Des Weiteren werden alle Taschen 11 A' bis 11D' und 12A' bis 12C' über einzelne, radiale Schieber entformt.

Mittels der Gestaltung des Planetenträgers 10 oder 10' des erfindungsgemäßen Planetengetriebes ist es somit möglich, den Herstellungsaufwand erheblich zu minimieren, da aufgrund einer Platzierung der Taschen 11 A bis 11C und 12A bis 12C bzw. 11A' bis 11D' und 12A' bis 12C' eine vollständige Entformung über radiale Schieber möglich wird.

### Bezugszeichen

- 1: erste Stufe
- 2: zweite Stufe
- 3: Sonnenrad
- 4A-4C: Planetenräder erste Stufe
- 5: Erstes Hohlrad
- 6: Innenverzahnung
- 7: Außenverzahnung
- 8A-8C: Planetenräder zweite Stufe
- 9: Zweites Hohlrad
- 10, 10': Planetenträger
- 11A-11C, 11A'-11D': Taschen Planetenräder erste Stufe
- 12A-12C, 12A'-12C': Taschen Planetenräder zweite Stufe
- 13: Kontur radialer Schieber
- 14A-14C: Durchbrüche
- 15A-15C: Stege
- xₛ: axialer Versatz
- α_{Versatz}, α_{Versatz1, 2}: Versatzwinkel

## Patentansprüche

1. Planetengetriebe für ein Automatikgetriebe eines Kraftfahrzeuges, umfassend zwei Stufen (1, 2), welche jeweils ein Sonnenrad (3), ein Hohlrad (5, 9) und zwischengeschaltete Planetenräder (4A-4C, 8A-8C) aufweisen, wobei das Hohlrad (5) der ersten Stufe (1) zugleich das Sonnenrad der zweiten Stufe (2) ausbildet und die Planetenräder (4A-4C, 8A-8C) beider Stufen (1, 2) über einen gemeinsamen, aus einem Gussmaterial gefertigten Planetenträger (10; 10') geführt sind, welcher die Planetenräder (4A-4C) der ersten Stufe (1) unter einem axialen Versatz (xₛ) zu den Planetenrädern (8A-8C) der zweiten Stufe (2) aufnimmt, **dadurch gekennzeichnet, dass** der Planetenträger (10; 10') derart einstückig ausgeführt ist, dass Taschen (11A-11C; 11A'-11D') im Planetenträger (10; 10') zur Aufnahme der Planetenräder (4A-4C) der ersten Stufe (1) jeweils unter einem Versatzwinkel (α_{Versatz}; α_{Versatz1,2}) in Umfangsrichtung zu Taschen (12A-12C; 12A'-12C') zur Aufnahme der Planetenräder (8A-8C) der zweiten Stufe (2) angeordnet sind, um eine Ausbildung während des Gießens mit Hilfe von Schiebern zu ermöglichen.

2. Planetengetriebe nach Anspruch 1, **dadurch gekennzeichnet, dass** der Versatzwinkel (α_{Versatz}; α_{Versatz1,2}) im Bereich 20° bis 70° liegt.

3. Planetengetriebe nach Anspruch 1 oder 2, **dadurch gekennzeichnet, dass** jede Tasche (11A'-11D', 12A'-12C') mittels eines individuellen Schiebers ausbildbar ist.

4. Planetengetriebe nach einem der Ansprüche 1 bis 3, **dadurch gekennzeichnet, dass** zwischen den Taschen (12A-12C) zur Aufnahme der Planetenräder (8) der zweiten Stufe (2) und Durchbrüchen (14A-14C) zur Fertigung der Taschen (11 A-11 C) der ersten Stufe (1) jeweils Stege (15A-15C) in Umfangsrichtung vorgesehen sind.

5. Planetengetriebe nach einem der vorhergehenden Ansprüche, **dadurch gekennzeichnet, dass** die erste (1) und die zweite Stufe (2) unterschiedliche Anzahlen an Planetenrädern (4A-4C, 8A-8C) aufweisen.

6. Planetengetriebe nach einem der vorhergehenden Ansprüche, **dadurch gekennzeichnet, dass** der Planetenträger (10; 10') als Druckgussteil ausgebildet ist.

7. Automatikgetriebe eines Kraftfahrzeuges, umfassend zumindest ein Planetengetriebe nach einem der Ansprüche 1-6.

## Claims

1. Planetary gear set for an automatic transmission of a motor vehicle, comprising two stages (1, 2) which have in each case a sun gear (3), an internal gear (5, 9) and interposed planet gears (4A-4C, 8A-8C), wherein the internal gear (5) of the first stage (1) simultaneously forms the sun gear of the second stage (2), and the planet gears (4A-4C, 8A-8C) of the two stages (1, 2) are guided by means of a common planet carrier (10; 10') produced from a cast material, which common planet carrier receives the planet gears (4A-4C) of the first stage (1) with an axial offset (xₛ) with respect to the planet gears (8A-8C) of the second stage (2), **characterized in that** the planet carrier (10; 10') is formed in one piece such that pockets (11A-11C; 11A'-11D') in the planet carrier (10; 10') for receiving the planet carriers (4A-4C) of the first stage (1) are arranged in each case with an angle offset (α_{Versatz}; α_{Versatz1,2}) in the circumferential direction with respect to pockets (12A-12C; 12A'-12C') for receiving the planet carriers (8A-8C) of the second stage (2) in order to permit formation by means of slides during the casting process.

2. Planetary gear set according to Claim 1, **characterized in that** the angle offset (α_{Versatz}; α_{Versatz1,2}) lies in the range from 20° to 70°.

3. Planetary gear set according to Claim 1 or 2, **characterized in that** each pocket (11A'-11D', 12A'-12C') can be formed by means of an individual slide.

4. Planetary gear set according to one of Claims 1 to 3, **characterized in that** webs (15A-15C) are provided, as viewed in the circumferential direction, in each case between the pockets (12A-12C) for receiving the planet gears (8) of the second stage (2) and apertures (14A-14C) for the production of the pockets (11A-11C) of the first stage (1).

5. Planetary gear set according to one of the preceding claims, **characterized in that** the first stage (1) and the second stage (2) have different numbers of planet gears (4A-4C; 8A-8C).

6. Planetary gear set according to one of the preceding claims, **characterized in that** the planet carrier (10; 10') is formed as a pressure die casting.

7. Automatic transmission of a motor vehicle, comprising at least one planetary gear set according to one of Claims 1 to 6.

## Revendications

1. Engrenage planétaire pour une transmission automatique d'un véhicule automobile, comportant deux étages (1, 2) qui comprennent respectivement une roue solaire (3), une couronne (5, 9) et des roues planétaires interposées (4A-4C, 8A-8C), la couronne (5) du premier étage (1) formant en même temps la roue solaire du deuxième étage (2) et les roues planétaires (4A-4C, 8A-8C) des deux étages (1, 2) étant guidées au moyen d'un porte-satellites (10 ; 10') commun fabriqué à partir d'un matériau de coulée, lequel porte-satellites reçoit les roues planétaires (4A-4C) du premier étage (1) avec un décalage axial (xₛ) par rapport aux roues planétaires (8A-8C) du deuxième étage (2), **caractérisé en ce que** le porte-satellites (10 ; 10') est réalisé d'une seule pièce de telle sorte que des cavités (11A-11C ; 11A'-11D') dans le porte-satellites (10 ; 10') pour recevoir les roues planétaires (4A-4C) du premier étage (1) soient disposées respectivement suivant un angle de décalage (α_{Versatz} ; α_{Versatz 1,2}) dans la direction périphérique par rapport à des cavités (12A-12C ; 12A'-12C') pour recevoir les roues planétaires (8A-8C) du deuxième étage (2), afin de permettre une formation pendant la coulée à l'aide de coulisseaux.

2. Engrenage planétaire selon la revendication 1, **caractérisé en ce que** l'angle de décalage (α_{Versatz} ; α_{Versatz 1,2}) se situe dans la plage de 20° à 70°.

3. Engrenage planétaire selon la revendication 1 ou 2, **caractérisé en ce que** chaque cavité (11A'-11D' ; 12A'-12C') peut être réalisée au moyen d'un coulisseau individuel.

4. Engrenage planétaire selon l'une quelconque des revendications 1 à 3, **caractérisé en ce que** des nervures (15A-15C) respectives sont prévues dans la direction périphérique entre les cavités (12A-12C) pour recevoir les roues planétaires (8) du deuxième étage (2) et des passages (14A-14C) pour fabriquer les cavités (11A-11C) du premier étage (1).

5. Engrenage planétaire selon l'une quelconque des revendications précédentes, **caractérisé en ce que** le premier (1) et le deuxième étage (2) comprennent des nombres différents de roues planétaires (4A-4C, 8A-8C).

6. Engrenage planétaire selon l'une quelconque des revendications précédentes, **caractérisé en ce que** le porte-satellites (10 ; 10') est réalisé en tant que pièce coulée sous pression.

7. Transmission automatique d'un véhicule automobile, comportant au moins un engrenage planétaire selon l'une quelconque des revendications 1 à 6.
